# FASCICULE DE BREVET EUROPEEN

(11) **EP 1 352 251 B1**
(45) Date de publication et mention de la délivrance du brevet: **27.05.2009**
(21) Numéro de dépôt: 01994903.1
(22) Date de dépôt: 19.12.2001
(51) Int. Cl.: G01P 15/00, G01P 15/08, G01P 15/12, G01V 1/18

(54) **ACCELEROMETRE SIX AXES**
SECHSACHSEN-BESCHLEUNIGUNGSMESSER
SIX-AXIS ACCELEROMETER

(30) Priorité: 22.12.2000 FR 0016968
(43) Date de publication de la demande: 15.10.2003
(73) Titulaire: NEXTER Electronics, 78000 Versailles (FR)
(72) Inventeur: DURAND, Didier, 82370 CAMPSAS (FR)
(74) Mandataire: Célanie, Christian
(86) Numéro de dépôt international: PCT/FR2001/004057
(87) Numéro de publication internationale: WO 2002/052281

(56) Documents cités:
- DE-A- 19 745 033
- US-A- 3 283 590
- US-A- 4 799 386
- US-A- 5 178 012
- US-A- 5 224 380
- DATABASE WPI Week 8143, 2 décembre 1981 (1981-12-02) Derwent Publications Ltd., London, GB; AN 1981-L1030D XP002177039 V.LEVSHENKO: "Six-component Seismic Stand" & SU 792 184 A (EARTH PHYSICS INSTITUTE), 30 décembre 1980 (1980-12-30)

## Description

Le secteur technique de la présente invention est celui des capteurs de mesure des composantes d'une accélération d'un objet.

Le capteur envisagé dans l'invention est destiné à permettre la mesure des trois composantes linéaires et des trois composantes angulaires d'accélération d'un objet qui peut être par exemple une maquette montée sur un banc d'essai de structures mécaniques ou une pièce sur une machine outil. Une simple ou double intégration permet l'utilisation d'un tel capteur en gyromètre ou gyroscope dans les dispositifs de stabilisation dynamique de visées, de tourelle, de caméras ou pour le guidage de missile et de munition.

Les applications du capteur selon l'invention touchent tous les domaines de la mesure des vibrations où l'utilisation de capteur trois axes est insuffisante ou est perturbée par des modes de vibrations complexes. L'état actuel de la technique montre que, par exemple, le guidage de missile s'effectue grâce à des gyroscopes de type mécanique ou laser. Ces produits existants emploient des technologies de pointe comme l'usage de boucle optique pour faisceau laser ou encore l'emploi de la micromécanique. La conséquence est donc une limitation de leur utilisation car leur coût est très élevé tout en sachant que, dans ce cas de figure, elle est unique. Ceci est un des principaux inconvénients de l'état actuel de la technique.

Le but de la présente invention est donc de fournir un capteur de mesure d'une accélération d'un objet combinant l'utilisation d'une technologie de réalisation classique avec un faible coût.

A cet effet, l'invention a donc pour objet un capteur de mesure des six composantes d'une accélération d'un objet soumis à une contrainte, capteur destiné à permettre la mesure de trois composantes d'accélération linéaires et trois composantes d'accélération angulaires, caractérisé en ce qu'il comprend un corps interposé entre deux plateaux de mesure reliés entre eux par un support, chacun des plateaux de mesure étant relié au corps par un ensemble de six poutres dont les axes sont orientés suivant six directions.

Selon une caractéristique de l'invention, les axes des six poutres sont orientés suivant une structure triangulée à symétrie ternaire.

Selon une autre caractéristique de l'invention, les plateaux de mesure se présentent sous la forme générale d'un anneau muni de six lames de flexion sur chacune desquelles est fixé un moyen de mesure.

Selon encore une autre caractéristique de l'invention, les deux plateaux de mesure sont solidaires l'un de l'autre par l'intermédiaire d'un support reliant l'anneaux de chaque plateau de mesure.

Les lames de flexion sont réparties sur l'anneau deux à deux sensiblement suivant un angle de cent vingt degrés.

Avantageusement, le moyen de mesure de la flexion de la lame est constitué par un palpeur micrométrique ou par une jauge de contrainte disposée au voisinage de la jonction entre l'anneau et les lames de flexion.

Avantageusement encore, le corps est constitué par une masse inertielle comprenant deux extrémités.

Selon une caractéristique de l'invention, les poutres sont d'un côté solidaires des extrémités de la masse inertielle et de l'autre chacune en contact par un point d'appui sur une lame de flexion.

Selon une autre caractéristique de l'invention, le point d'appui de la poutre sur la lame de flexion est réalisé par une liaison à rotule libre.

Selon encore une autre caractéristique de l'invention, les lames de flexion sont précontraintes par l'intermédiaire du support reliant les deux anneaux des plateaux de mesures.

Un tout premier avantage du capteur de mesure selon l'invention réside dans la possibilité de mesurer les six composantes d'une accélération et, ce, en utilisant des technologies classiques de réalisation.

Un autre avantage réside dans son faible coût.

Un autre avantage de l'invention réside dans le fait que sa masse et ses dimensions sont très faibles.

D'autres caractéristiques, détails et avantages de l'invention ressortiront plus clairement à la lecture de la description donnée ci-après à titre indicatif en relation avec des dessins dans desquels :
- la figure 1 est une vue en trois dimensions du capteur de mesure selon l'invention mettant en évidence le support,
- la figure 2 est une vue en trois dimensions du capteur selon l'invention montrant plus particulièrement une extrémité,
- la figure 3 est une vue en perspective de la constitution interne du capteur selon l'invention, et
- la figure 4 est une vue en perspective du principe général permettant de définir les axes des poutres du capteur selon l'invention.

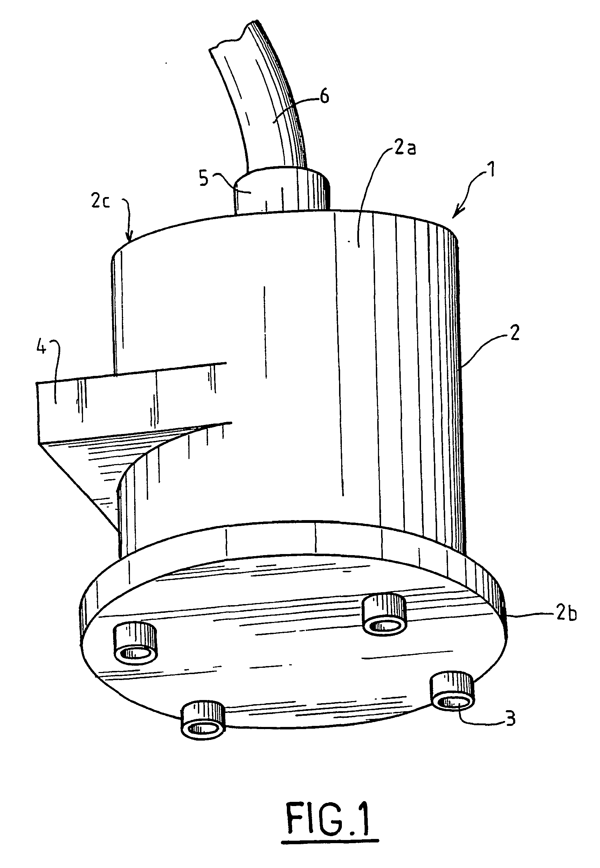

Sur la figure 1, on a représenté un mode de réalisation du capteur de mesure 1 selon l'invention installé à l'intérieur d'un support 2 constitué dans cet exemple d'une cuve 2a, d'un fond 2c et d'un couvercle 2b. Ce dernier est maintenu sur la cuve 2a par l'intermédiaire d'au moins une vis 3, le mode de réalisation représenté ici en utilise quatre. La cuve 2a comporte un plot de fixation 4 indifféremment situé sur le support 2 servant de point de fixation avec l'objet (non représenté) pour lequel on désire connaître les composantes d'accélérations tel qu'un missile ou une munition. Le support 2 comprend une traversée 5, situé dans ce mode de réalisation dans le fond 2c, pour permettre la liaison par un câble 6 entre l'intérieur du capteur 1 et un module électronique de conditionnement et un module informatique de calcul mathématique non représentés.

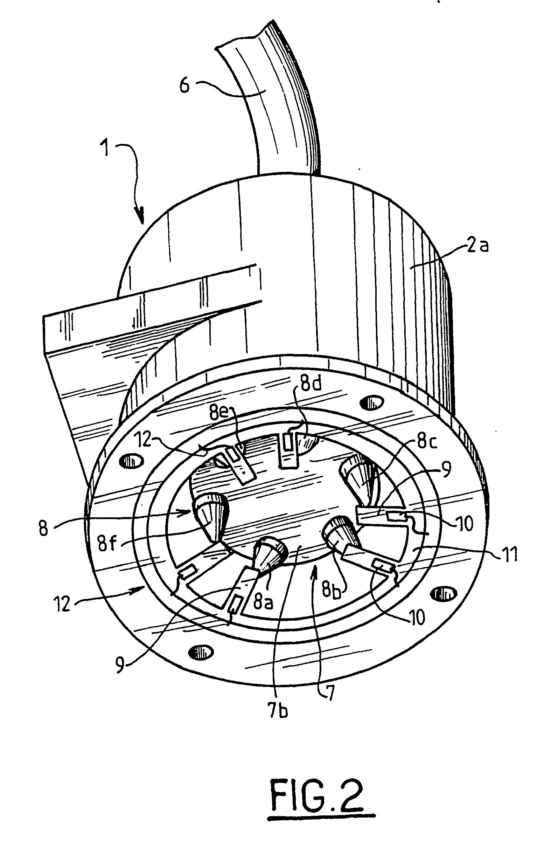

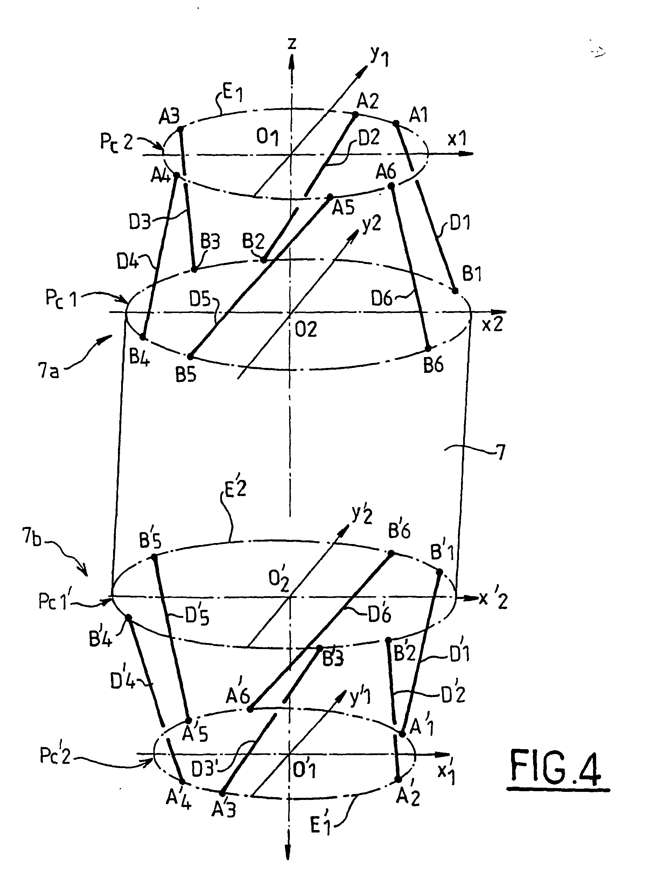

La figure 2 met en évidence une extrémité du capteur 1. On y voit le câble 6 et le support 2 dont le couvercle 2b est enlevé. Cette figure permet de voir une extrémité 7b du corps 7 sur laquelle sont rendus solidaires un ensemble 8 de six poutres 8a, 8b, 8c, 8d, 8e' 8f, toutes identiques mais dont les axes sont orientés suivant une structure triangulée à symétrie ternaire, structure qui sera décrite plus complètement en relation avec la figure 4. Ces six poutres 8a-8f sont en contact avec six lames de flexion 9. Ces dernières sont solidaires d'un anneau 11 et répartis par groupe de deux sensiblement tous les cent vingt degrés, le tout formant un plateau de mesure 12 ou 13. Chaque lame de flexion 9 porte un moyen de mesure 10 qui est disposé au voisinage de la jonction entre la lame de flexion 9 et l'anneau 11. Ce moyen de mesure peut être indifféremment installé à l'intérieur ou à l'extérieur des lames de flexion 9. En pratique, il s'agit d'un palpeur micrométrique ou, plus avantageusement et selon ce mode de réalisation, d'une jauge de contrainte. On voit sur cette figure que ces jauges de contraintes sont reliées électriquement par un conducteur 12 vers le câble 6.

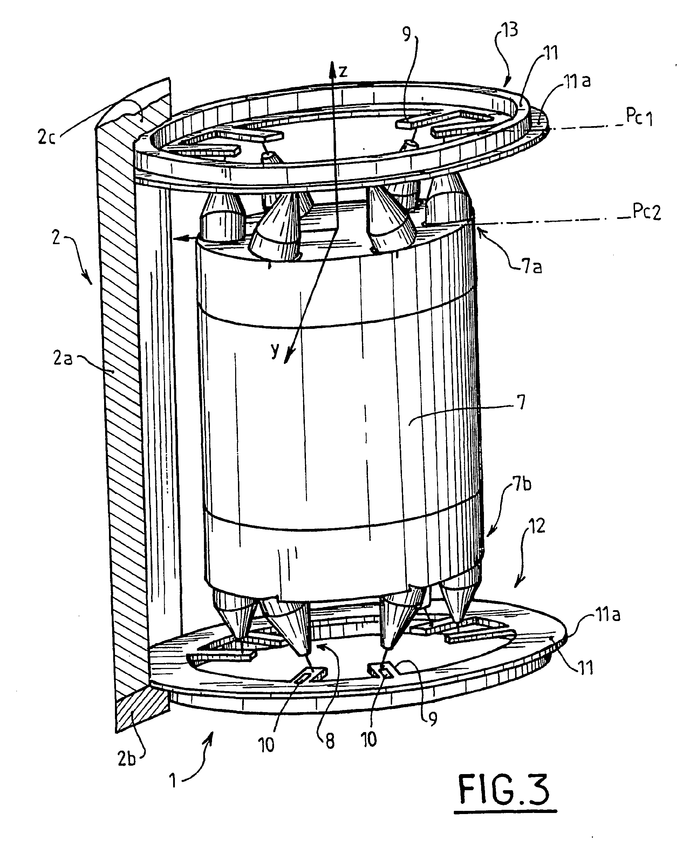

La figure 3 illustre plus complètement la constitution interne du capteur selon l'invention. On y voit partiellement la cuve 2a munie du fond 2c et le couvercle 2b qui, en position fermé, viennent emprisonner les deux plateaux de mesure 12 et 13 par vissage du couvercle 2b. Comme décrit précédemment, chacun des plateaux de mesure 12 et 13 est équipé de six lames de flexion 9 reliées à l'anneau 11. Ce dernier comporte un épaulement 11a qui pour le plateau 13 vient coopérer avec le fond 2c de la cuve 2a, et pour le plateau 12 coopère avec le couvercle 2b. Chacun des plateaux de mesure 12 et 13 est relié aux extrémités 7a et 7b du corps 7 par l'intermédiaire de six poutres 8a-8f. On voit ici que chaque poutre 8a-8f est d'un côté solidaire de l'extrémité du corps 7 par vissage, forgeage ou tout autre moyen. Ces poutres 8a-8f sont de l'autre côté en contact sur un point d'appui sur la lame de flexion 9 et ce, par l'intermédiaire d'une liaison à rotule. Ces lames 9, d'une épaisseur d'environ cinq dixièmes de millimètre, peuvent, par exemple, être découpées par électroérosion. A titre illustratif encore, les poutres 8a-8f peuvent être des pointes de palpeurs terminées par des billes rubis de trois dixièmes de millimètre vendue dans le commerce. Ces billes de rubis sont en contact sur les lames de flexions 9 aux points d'appui. Ce dernier prend la forme d'une demi-cavité sphérique dans laquelle vient se positionner la bille de rubis. C'est pourquoi la liaison rotule est dite libre. Le corps 7 est constitué par un cylindre métallique par exemple de quarante millimètres de diamètre ; ce cylindre constitue une masse inertielle.

L'assemblage du couvercle 2b sur la cuve 2a provoque la mise en précontrainte des lames de flexion 9. Ces dernières ne subissent, de par le déplacement du corps 7 et via les puits 8, que des variations de flexion.

En se reportant à la figure 4, on a illustré en perspective un principe général permettant de définir les orientations des axes des six poutres 8a-8f sur chaque extrémité 7a et 7b du corps 7. Plus précisément, on a considéré sur l'extrémité 7a deux plans de coupe PC1 et PC2 représentés sur la figure 3. Le plan de coupe PC1 passe par les points d'appui des poutres 8a-8f sur les lames de flexion 9 matérialisés par A1 à A6. Le plan de coupe PC2 passe par les centres de solidarisation B1 à B6 des poutres 8a-8f fixées sur l'extrémité 7a. Les plans de coupe PC1 et PC2 sont respectivement sur deux cercles matérialisés sur la figure par les ellipses E1 et E2 qui n'ont pas nécessairement le même diamètre. E1 se matérialise dans le repère X1-01-Y1 et E2 se matérialise suivant le repère X2-O2-Y2.

Concrètement, les six points A1 à A6 sont répartis sur un cercle suivant une symètrie ternaire, c'est-à-dire que l'on définit trois couples de points A1-A2, A3-A4, A5-A6 répartis à environ 120° les uns des autres. D'une manière semblable, les six points B1 à B6 sont également répartis suivant une symétrie ternaire. On obtient donc six directions D1 à D6 support des axes des poutres 8. Ces six directions sont respectivement définies par les six couples de points A1-B1 à A6-B6. Le choix de la position des points A1 à A6 et B1 à B6 est effectué suivant les conditions d'utilisation du capteur et n'est donc pas nécessairement prédéterminé à l'avance. En aucun cas les points A1 à A6 ne devront être placés en un point B1 à B6 en projection devant l'axe 2.

La même description s'applique à l'autre extrémité 7b du corps 7. Les six autres poutres et lames de flexion sont situées symétriquement ou non par rapport au corps 7. L'ensemble des points, centres, repères directions, plans de coupe et ellipses sont références référencé identiquement à la description en rapport avec l'extrémité 7a en y ajoutant l'index « ' ».

Le fonctionnement du capteur selon l'invention est le suivant. Le support 2 est le moyen d'application des accélérations à mesurer. En le fixant à un missile ou à une munition et après précontraintes des lames de flexion 9, le corps 7 va subir des accélérations. La structure triangulée des poutres 8a-8f va permettre de transmettre des accélérations au corps 7 en générant des variations des contraintes appliquées sur les lames de flexion 9. Ces variations de contraintes aboutissent à la liaison rotule et font donc fléchir plus ou moins les lames de flexion 9. Ce fléchissement est mesuré par le moyen de mesure 10, dans le cas présent une jauge de contrainte collée à proximité de la jonction entre les lames de flexion 9 et l'anneau 11. Le capteur 1 fournit alors douze signaux électriques représentatifs des variations de contraintes appliquées aux douze lames de flexion 9 par les accélérations du corps 7.

Pour connaître les six composantes d'accélération il faut alors utiliser une relation faisant intervenir une série de matrice Gᵢ qui est la caractéristique intrinsèque du capteur.

On a la relation matricielle A=V.G₁+V².G₂+V³.G₃+... où :
- A=[ax, ay, az, mx, my, mz] est le vecteur d'accélération inconnu à mesurer. Il sera exprimé dans le repère où les matrices Gi sont exprimées avec ax, ay, az pour les composantes linéaires et mx, my, mz pour les composantes angulaires autour des axes x, y, z repérés sur la figure 3,
- Gi (12x6) est la série de matrices de découplage d'ordre i du capteur exprimée dans le repère où l'on désire connaître les accélérations,
- et V=[v1...v12] sont les douze signaux fournis par le capteur 1.

La connaissance des matrices Gᵢ est une condition à l'utilisation du capteur. Elles doivent être déterminées par une méthode d'identification paramétrique comme la méthode de la pseudo-inverse généralisée. On choisit tout d'abord l'ordre du système qui déterminera le nombre de matrice G à calculer. Un ordre un peut être suffisant, mais on y préférera un ordre deux. La méthode consiste à soumettre le capteur à un vecteur accélération connu Aⱼ et à relever pour chaque accélération le vecteur Vⱼ où j=1 à n, n étant le nombre de mesures qui doit être supérieur à 12.

## Revendications

1. Capteur de mesure (1) des composantes d'une accélération d'un objet, capteur destiné à permettre la mesure de trois composantes d'accélération linéaires et trois composantes d'accélération angulaires, **caractérisé en ce qu'**il comprend un corps (7) interposé entre deux plateaux de mesure (12, 13) d'une accélération, reliés entre eux par un support (2), chacun des plateaux de mesure (12, 13) étant relié au corps (7) par un ensemble (8) de six poutres (8a-8f) dont les axes sont orientés suivant six directions (D1-D6, D1'-D6').

2. Capteur de mesure (1) selon la revendication 1, **caractérisé en ce que** les axes des six poutres (8a-8f) sont orientés suivant une structure triangulée à symétrie ternaire.

3. Capteur de mesure (1) selon la revendication 1 ou 2, **caractérisé en ce que** les plateaux de mesure (12, 13) se présentent sous la forme générale d'un anneau (11) muni de six lames de flexion (9) sur chacune desquelles est fixé un moyen de mesure (10) de la flexion des lames.

4. Capteur de mesure (1) selon la revendication 2, **caractérisé en ce que** les deux plateaux de mesure (12, 13) sont solidaires l'un de l'autre par l'intermédiaire d'un support (2) reliant l'anneaux (11) de chaque plateau de mesure (12, 13).

5. Capteur de mesure (1) selon la revendication 3, **caractérisé en ce que** les lames de flexion (9) sont réparties sur l'anneau (11) deux à deux sensiblement suivant un angle de cent vingt degrés.

6. Capteur de mesure (1) selon la revendication 4, **caractérisé en ce que** le moyen de mesure (10) est constitué par un palpeur ou par une jauge de contrainte disposée au voisinage de la jonction entre l'anneau (11) et les lames de flexion (9).

7. Capteur de mesure (1) selon l'une quelconque des revendications précédentes, **caractérisé en ce que** le corps (7) est constitué par une masse inertielle comprenant deux extrémités (7a, 7b).

8. Capteur de mesure (1) selon la revendication 6, **caractérisé en ce que** les poutres (8a-8f) sont d'un côté solidaires des extrémités (7a, 7b) de la masse inertielle et de l'autre chacune en contact par un point d'appui sur une lame de flexion (9).

9. Capteur de mesure (1) selon la revendication 8, **caractérisé en ce que** le point d'appui de la poutre (8a-8f) sur la lame de flexion (9) est réalisé par une liaison à rotule libre.

10. Capteur de mesure (1) selon l'une quelconque des revendications précédentes, **caractérisé en ce que** les lames de flexion (9) sont précontraintes par l'intermédiaire du support (2) reliant les deux anneaux (11) des plateaux de mesures (12, 13).

## Claims

1. Sensor (1) to measure the acceleration components of an object, such sensor intended to enable the measurement of three linear acceleration components and three angular acceleration components, **characterised in that** it comprises a body (7) positioned between two acceleration measurement plates (12, 13) which are linked together by a support (2), each of the measurement plates (12, 13) being connected to the body (7) by an assembly of six beams (8a-8f) whose axes are oriented in six directions (D1-D6, D1'-D6').

2. A measurement sensor (1) according to Claim 1, **characterised in that** the axes of the six beams (8a-8f) are oriented in a triangulated structure having ternary symmetry.

3. A measurement sensor (1) according to Claims 1 or 2, **characterised in that** the measurement plates (12, 13) are roughly in the shape of a ring (11) fitted with six flexion blades (9) on each of which measurement means (10) are attached to measure the flexion of the blades.

4. A measurement sensor (1) according to Claim 2, **characterised in that** the two measurement plates (12, 13) are integral with one another by means of a support (2) linking the ring (11) of each measurement plate (12, 13).

5. A measurement sensor (1) according to Claim 3, **characterised in that** the flexion blades (9) are spaced on the ring (11) two by two substantially at an angle of one hundred and twenty degrees.

6. A measurement sensor (1) according to Claim 4, **characterised in that** the measurement means (10) are constituted by a probe or by a strain gauge positioned near to the point of junction between the ring (11) and the flexion blades (9).

7. A measurement sensor (1) according to any one of the above Claims, **characterised in that** the body (7) is constituted by an inertial mass comprising two ends (7a, 7b).

8. A measurement sensor (1) according to Claim 6, **characterised in that** the beams (8a-8f) are integral at one side with the ends (7a, 7b) of the inertial mass and at the other each is in contact by a fulcrum on a flexion blade (9).

9. A measurement sensor (1) according to Claim 8, **characterised in that** the fulcrum of the beam (8a-8f) on the flexion blade (9) is made by a free ball joint.

10. A measurement sensor (1) according to any one of the previous Claims, **characterised in that** the flexion blades (9) are prestressed by means of the support (2) linking the two rings (11) of the measurement plates (12, 13).

## Patentansprüche

1. Sensor (1) zur Messung der Komponenten einer Beschleunigung eines Objektes, wobei der Sensor dafür vorgesehen ist, die Messung von drei linearen Beschleunigungskomponenten und von drei Winkel-Beschleunigungskomponenten zu ermöglichen, **dadurch gekennzeichnet, dass** er einen Körper (7) umfasst, der zwischen zwei Teller (12, 13) zur Messung einer Beschleunigung, welche durch einen Halter (2) miteinander verbunden sind, eingefügt ist, wobei jeder der Messteller (12, 13) durch einen Satz (8) von sechs Trägern (8a-8f), deren Achsen gemäß sechs Richtungen (D1-D6, D1'-D6') ausgerichtet sind, mit dem Körper (7) verbunden ist.

2. Messsensor (1) nach Anspruch 1, **dadurch gekennzeichnet, dass** die Achsen der sechs Träger (8a-8f) gemäß einer aus Dreiecken zusammen gesetzten Struktur mit dreifacher Symmetrie ausgerichtet sind.

3. Messsensor (1) nach Anspruch 1 oder 2, **dadurch gekennzeichnet, dass** die Messteller (12, 13) sich in der allgemeinen Form eines Rings (11) darstellen, der mit sechs Biegezungen (9) versehen ist, an denen jeweils ein Mittel zur Messung (10) der Durchbiegung der Zungen angebracht ist.

4. Messsensor (1) nach Anspruch 2, **dadurch gekennzeichnet, dass** die beiden Messteller (12, 13) fest miteinander mit Hilfe eines Halters (2), der den Ring (11) eines jeden Messtellers (12, 13) verbindet, verbunden sind.

5. Messsensor (1) nach Anspruch 3, **dadurch gekennzeichnet, dass** die Biegezungen (9) über den Ring (11) paarweise im wesentlichen mit einem Winkel von hundertzwanzig Grad verteilt sind.

6. Messsensor (1) nach Anspruch 4, **dadurch gekennzeichnet, dass** das Messmittel (10) von einem Fühler oder von einem in der Nähe der Verbindungsstelle zwischen dem Ring (11) und den Biegezungen (9) angeordneten Dehnmessstreifen gebildet wird.

7. Messsensor (1) nach irgendeinem der vorhergehenden Ansprüche, **dadurch gekennzeichnet, dass** der Körper (7) von einer trägen Masse gebildet wird, die zwei Enden (7a, 7b) umfasst.

8. Messsensor (1) nach Anspruch 6, **dadurch gekennzeichnet, dass** die Träger (8a-8f) an einer Seite fest mit den Enden (7a, 7b) der trägen Masse verbunden sind und an der anderen jeweils über einen Auflagepunkt auf einer Biegezunge (9) in Kontakt stehen.

9. Messsensor (1) nach Anspruch 8, **dadurch gekennzeichnet, dass** der Auflagepunkt des Trägers (8a-8f) auf einer Biegezunge (9) durch eine Verbindung mit freiem Gelenk bewerkstelligt wird.

10. Messsensor (1) nach irgendeinem der vorhergehenden Ansprüche, **dadurch gekennzeichnet, dass** die Biegezungen (9) mit Hilfe des Halters (2), der die beiden Ringe (11) der Messteller (12, 13) verbindet, vorgespannt sind.
